# EUROPEAN PATENT SPECIFICATION

(11) **EP 4 251 906 B1**
(45) Date of publication and mention of the grant of the patent: **15.04.2026**
(21) Application number: 21899261.8
(22) Date of filing: 23.11.2021
(51) Int. Cl.: F16J 15/32, F16J 15/00, F04B 15/08, F04B 53/14, F16J 15/3204, F16J 15/3236, F16J 15/3268, F16J 15/3276, F16J 15/16

(54) **SEAL STACK ASSEMBLY FOR RECIPROCATING PUMP**
DICHTUNGSSTAPELANORDNUNG FÜR KOLBENPUMPE
ENSEMBLE À EMPILEMENT DE JOINTS D'ÉTANCHÉITÉ POUR POMPE ALTERNATIVE

(30) Priority: 24.11.2020 US 202063117806 P
(43) Date of publication of application: 04.10.2023
(73) Proprietor: Saint-Gobain Performance Plastics Corporation, Solon, OH 44139 (US)
(72) Inventor: MAFFEZZOLI, Andrea, 20900 Monza (IT); DUBOIS, Herman M., 2570 Duffel (BE); STARK, Colby, Costa Mesa, California 92626 (US); BURLOT, Philippe, 22460 Le Quillio (FR); STEVENHEYDENS, Gino L., 2830 Willebroek (BE); GOY, Christel C., Anaheim, California 92804 (US); YAN, Xiang, Barrington, Rhode Island 02806 (US)
(74) Representative: Zimmermann & Partner Patentanwälte mbB
(86) International application number: PCT/US2021/072582
(87) International publication number: WO 2022/115853

(56) References cited:
- WO-A2-2007/119112
- JP-A- 2000 104 834
- US-A- 3 415 581
- US-A- 4 239 460
- US-A- 4 890 937
- US-A1- 2016 319 936
- US-A1- 2016 319 936
- US-A1- 2018 023 682
- US-A1- 2018 347 560
- US-A1- 2020 355 270
- US-B2- 10 125 872
- US-B2- 10 626 994

## Description

### BACKGROUND ART

Seals are used in many industrial applications to prevent leakage between components of an assembly. In some applications, seals may be subjected to extreme operating conditions, such as extreme pressures or temperatures. These extreme operating conditions often necessitate the use of a seal stack assembly, which uses a plurality of individual seals, to provide an efficient and reliable seal along long probes or shafts that oscillate, reciprocate, rotate, vibrate, or combinations thereof with respect to a housing. At such extreme operating conditions, such as those present during the use of liquid hydrogen, traditional seal stack assemblies may not effectively maintain a seal. Accordingly, the industry continues to demand improvements in seal technology for such applications.

US2020/0355270A1 discloses a leak-proof plunger pump comprising a plunger base, a reciprocation hole, and a plunger rod matching the reciprocation hole.

US4890937A discloses a cartridge bearing assembly includes a non-resilient tubular bearing element and a spring for causing the tubular bearing element to float with a shaft therethrough within a surrounding housing.

US10125872B2 discloses seal assemblies with support to reduce seal extrusion under high to very high pressure changes due to repeated piston reciprocating movement.

### BRIEF DESCRIPTION OF THE DRAWINGS

So that the manner in which the features and advantages of the embodiments are attained and can be understood in more detail, a more particular description may be had by reference to the embodiments thereof that are illustrated in the appended drawings. However, the drawings illustrate only some embodiments and therefore are not to be considered limiting in scope as there may be other equally effective embodiments.
FIG. 1A is a partial cross-sectional view of an assembly having an annular seal stack assembly.
FIG. 1B is a partial cross-sectional view of an assembly having an annular seal stack assembly according to an embodiment of the disclosure.
FIG. 2 is a cross-sectional view of a first annular seal according to an embodiment of the disclosure.
FIG. 3 is a cross-sectional view of a second annular seal according to an embodiment of the disclosure.
FIG. 4 is an oblique view of a spacer according to an embodiment of the disclosure.
FIG. 5 is a cross-sectional view of a third annular seal according to an embodiment of the disclosure.
FIG. 6 is a flowchart of a method of forming an annular seal in an assembly according to an embodiment of the disclosure.

The use of the same reference symbols in different drawings indicates similar or identical items.

### DETAILED DESCRIPTION OF THE PREFERRED EMBODIMENT(S)

Subject matter of the present invention is an annular seal stack assembly as defined n claim 1, and an assembly as defined in claim 14, which assembly comprises the annular seal stack assembly according to the present invention. The dependent claims define particular embodiments thereof.

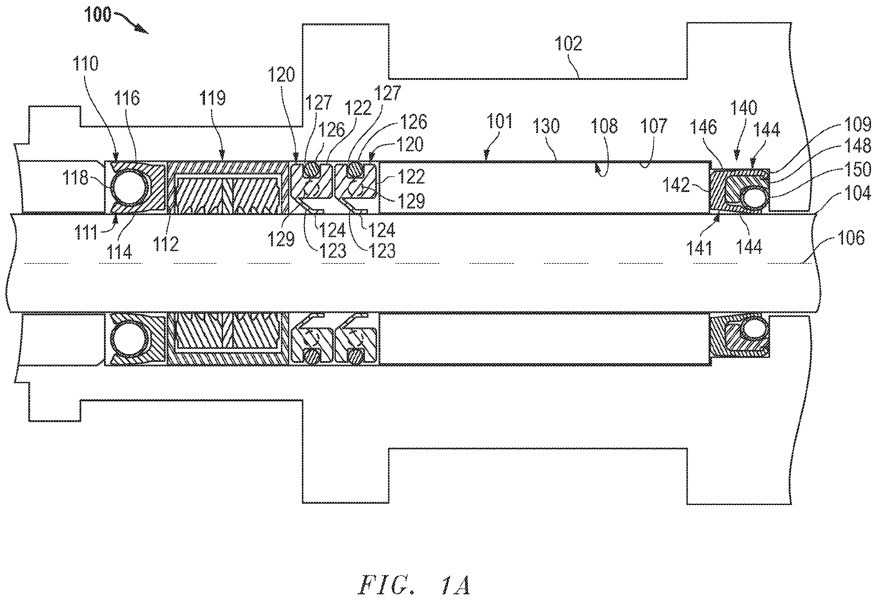

FIG. 1A shows a partial cross-sectional view of an assembly 100 having an annular seal stack assembly 101. The annular seal stack assembly 101 shown in FIG. 1A is not according to claim 1 but FIG. 1A generally shows features of an assembly 100 according to the present invention.

In some embodiments, the assembly 100 may be a cryogenic reciprocating application. In some embodiments, the assembly 100 may be a coupling assembly, a pump assembly, a solenoid assembly, or valve assembly. In some embodiments, the assembly 100 may be a reciprocating pump assembly. In some embodiments, the assembly 100 may be a cryogenic pump assembly. In a particular embodiment, the assembly 100 may comprise a liquid hydrogen (LH2) reciprocating pump. The assembly 100 may generally comprise a housing 102 and a probe or shaft 104 that oscillates, reciprocates, rotates, vibrates, or combinations thereof with respect to the housing 102. In more specific embodiments, the assembly 100 may comprise a housing 102 and a shaft 104 that reciprocates axially along an axis 106 of the shaft 104. The assembly 100 may further comprise a cavity 108 formed between the housing 102 and the probe 104 and configured to receive the seal stack assembly 101. In some embodiments, the cavity 108 may comprise a first portion 107 and a second portion 109. In some embodiments, the first portion 107 may comprise a larger outer diameter defined by the housing 102 than the second portion 109. In some embodiments, the first portion 107 may comprise a smaller outer diameter defined by the housing 102 than the second portion 109. However, in some embodiments, the first portion 107 and the second portion 109 may comprise a substantially similar or the same outer diameter defined by the housing 102. It will be appreciated that portions of the seal stack assembly 101 may be disposed in each portion 107, 109 of the cavity 108 to form an annular seal between the housing 102 and the shaft 104.

An annular seal stack assembly 101 comprising a first seal 110, at least one second seal 120, a spacer 130, and a plurality of third seals 140 may generally be disposed within the cavity 108 of the assembly 100 and annularly about the shaft 104. The seal stack assembly 101 may generally comprise an upper end (first end) defined by the first annular seal 110 and a lower end (opposing second end) defined by one of the third annular seals 140. The seal stack assembly 101 generally is configured to contact and provide a radial seal between the housing 102 and the shaft 104 of the assembly 100. In some embodiments, the seal stack assembly 101 may continually provide an annular seal between the housing 102 and the shaft 104 of the assembly 100 during operation of the assembly 100 at cryogenic temperatures, during exposure of at least a portion of the seal stack assembly 101 to cryogenic temperatures, or a combination thereof. In some embodiments, the seal stack assembly 101 may be suitable for operation between room temperature (at least about 15 degrees Celsius) and cryogenic temperatures (at least about -150 degrees Celsius, or even at least -270 degrees Celsius) to continually provide an annular seal between the housing 102 and the shaft 104 of assembly. In some embodiments, the seal stack assembly 101 may also be suitable for operation at elevated pressures (at least up to 24 bar (about 350 psi) or greater) to continually provide an annular seal between the housing 102 and the shaft 104 of assembly 100. In some embodiments, the seal stack assembly 101 may be configured to continually provide the annular seal between the housing 102 and the shaft 104 of the assembly during a change in pressure, a change in temperature, or a combination thereof.

The first annular seal 110 may be configured to contact and provide an annular seal between a portion of the housing 102 and a portion of the shaft 104 of the assembly 100. The first annular seal 110 may generally comprise a jacket 111 comprising a base 112, an inner sealing leg 114 extending from the base 112, and an outer sealing leg 116 extending from the base 112. The first annular seal 110 may also comprise an energizing spring 118 disposed within the jacket 111 between and in contact with the inner sealing leg 114 and the outer sealing leg 116 of the jacket 111. In some embodiments, the energizing spring 118 may be round. However, in other embodiments, the energizing spring 118 may be elliptical, oval, U-shaped, or any other suitable shape. The energizing spring 118 may be configured to bias the inner sealing leg 114 and the outer sealing leg 116 away from each other to maintain contact between the sealing legs 114, 116 of the first annular seal 110 and each of the housing 102 and the shaft 104 of the assembly 100.

In some embodiments, the first annular seal 110 may comprise a scraper 119. However, in some embodiments, the scraper 119 may be a standalone component and may be present in the seal stack assembly 101 without a first annular seal 110. In some embodiments, the scraper 119 may be disposed adjacent to the base of the first annular seal 110. In other embodiments, the scraper 119 may be disposed at the upper end of the seal stack assembly and disposed adjacent to ends of the sealing legs 114, 116 of the jacket 111 of the first annular seal 110. The scraper 119 may be configured to prevent and/or remove an accumulation of moisture, ice, or a combination thereof from the shaft 104 of the assembly 100. It will be appreciated that the first annular seal 110 comprising a scraper 119 may be substantially similar to those disclosed in U.S. Patent No. 10,626,994 B2.

The first annular seal 110 may be disposed in the first portion 107 of the cavity 108 of the assembly 100. The first annular seal 110 may be disposed at the upper end of the seal stack assembly 101. The first annular seal 110 may generally be oriented in the cavity 108 such that the jacket 111 is open outward towards the upper end of the seal stack assembly 101 and the base 112 of the jacket 111 is oriented inward towards the lower end of the seal stack assembly 101. Additionally, the first annular seal 110 may generally be oriented in the cavity 108 such that the inner sealing leg 114 of the jacket 111 extends along and in contact with the shaft 104 and the outer sealing leg 116 of the jacket 111 extends along and in contact with the housing 102. In some embodiments, the seal stack assembly 101 may comprise a plurality of first annular seals 110. In such embodiments, each of the plurality of first annular seals 110 may be oriented in the same direction as disclosed herein. Further, in embodiments comprising a plurality of first annular seals 110, one or more of the plurality of first annular seals 110 may not comprise a scraper 119. Accordingly, in some embodiments comprising a plurality of first annular seals 110, only one of the first annular seals 110 may comprise a scraper 119, such that the seal stack assembly 101 comprises a single scraper 119. However, in some embodiments comprising a plurality of first annular seals 110, the seal stack assembly 101 may comprise a plurality of scrapers 119.

The second annular seal 120 is configured to contact and provide an annular seal between a portion of the housing 102 and a portion of the shaft 104 of the assembly 100. The second annular seal 120 may be different from the first annular seal 110. The second annular seal 120 generally comprises a body 122, an inner sealing leg 123 extending at an angle from the body 122, and a sealing flange 124 extending at an angle from an end of the inner sealing leg 123. The second annular seal 120 may also comprise a sealing ring 126 disposed in a cavity 127 formed in the body 122 and on an opposing side of the body 122 from the sealing leg 123 and the sealing flange 124. In some embodiments, the sealing ring 126 may comprise an O-ring. In some embodiments, the sealing ring 126 may comprise an energizing spring. In some embodiments, the sealing ring 126 may comprise a spring energized seal integrated within the cavity 127. Further, in some embodiments, the second annular seal 120 may also comprise an outer sealing leg on the outer diameter of the second annular seal 120. In particular embodiments, the outer sealing leg may extend from the body 122 and be substantially similar to and/or symmetrical about the body with the sealing leg 123 on the inner diameter of the second annular seal 120. In some embodiments, the body 122 may comprise a substantially rectangular or square profile. In some embodiments, the body 122 may comprise rounded or chamfered corners. In some embodiments, the second annular seal 120 may comprise an energizing spring disposed between the body 122 and the sealing leg 123 and/or the sealing flange 124. In some embodiments, the second annular seal 120 may comprise a metal band 129 disposed throughout the body 122. The metal band 129 may reduce the sensitivity of the second annular seal 120 to thermal contraction.

The second annular seal 120 may be disposed in the first portion 107 of the cavity 108 of the assembly 100. In some embodiments, the second annular seal 120 may be disposed adjacent to the scraper 119. In some embodiments, the second annular seal 120 may be disposed adjacent to the first annular seal 110. In some embodiments, the second annular seal 120 may be disposed between the scraper 119 and the spacer 130. In some embodiments, the second annular seal 120 may be disposed between the first annular seal 110 and the spacer 130. The second annular seal 120 may generally be oriented in the cavity 108 such that the inner sealing leg 123 extends from the body 122 inwardly at an angle towards the shaft 104 and in the direction of the spacer 130. The second annular seal 120 may also be oriented such that the sealing flange 124 is in contact with the shaft 104. In some embodiments, the sealing flange 124 may be substantially flat about the circumference or outer diameter of the shaft 104. However, in other embodiments, the sealing flange 124 may contact the shaft 104 at an angle. The second annular seal 120 may also be oriented such that the sealing ring 126 is in contact with and forms an annular seal with the housing 102. In some embodiments, the seal stack assembly 101 may comprise a plurality of second annular seals 120. In some embodiments, the seal stack assembly 101 may comprise two second annular seals 120. In some embodiments, the seal stack assembly 101 may comprise more than two second annular seals 120. In such embodiments, the plurality of second annular seals 120 may be oriented in the same direction as disclosed herein. In embodiments comprising a plurality of second annular seals 120, one or more of the second annular seals 120 may be free of the sealing ring 126. Further, in some embodiments, the seal stack assembly 101 may not comprise a first annular seal 110, such that the second annular seal 120 and/or a scraper 119 defines the upper end of the seal stack assembly 101.

The spacer 130 may be configured to cooperate with and/or support the first annular seal 110, the at least one second annular seal 120, and the plurality of third annular seals 140 to maintain an annular seal between the housing 102 and the shaft 104 of the assembly 100. In some embodiments, the spacer 130 may comprise a rigid hollow component having a substantially uniform inner diameter and a substantially uniform outer diameter. In some embodiments, the spacer 130 may also distribute forces acting on one or more of the annular seals 110, 120, 140 to other annular seals 110, 120, 140 in the seal stack assembly 101 to maintain a pressure distribution across the seal stack assembly 101. Furthermore, in alternative embodiments, the spacer 130 may comprise a plurality of annular seals (e.g., seals 110, 120, 140, or any other suitable annular seal) or other annular components configured to fill the length of the seal stack assembly 101 along the axial length of the shaft 104 of the assembly.

The spacer 130 may be disposed in the first portion 107 of the cavity 108 of the assembly 100. In some embodiments, the spacer 130 may comprise a clearance fit within the first portion 107 of the cavity 108 of the assembly 100. In some embodiments, the spacer 130 may comprise a tight-tolerance clearance fit within the first portion 107 of the cavity 108 of the assembly 100. The spacer 130 may be disposed adjacent to the second annular seal 120. The spacer 130 may be disposed between the second annular seal 120 and a third annular seal 140. In some embodiments, the spacer 130 may be a single unitary component. In some embodiments, the seal stack assembly 101 may comprise a plurality of spacers 130. In such embodiments, an O-ring or other sealing mechanism may be disposed between adjacent spacers 130. In alternative embodiments, the spacer 130 may comprise any other profile configured to occupy a length along the shaft 104 of the assembly 100.

In some embodiments, the spacer 130 may comprise a length that is axially longer than the first annular seal 110, the second annular seal 120, the third annular seal(s) 140, and/or the total length of any combination thereof. In some embodiments, the spacer 130 may comprise a majority of the total axial length of the seal stack assembly 101. In some embodiments, the spacer 130 may comprise at least 25%, at least 30%, at least 35%, at least 40%, at least 45%, at least 50%, at least 60%, at least 65%, or at least 75% of the total axial length of the seal stack assembly 101. In some embodiments, the spacer 130 may comprise not greater than 95%, not greater than 90%, not greater than 85%, not greater than 80%, not greater than 75%, not greater than 70%, not greater than 65%, or not greater than 60% of the total axial length of the seal stack assembly 101. Further, the spacer 130 may comprise between any of these minimum and maximum values of the total axial length of the seal stack assembly 101, such as at least 25% to not greater than 95%, or even at least 50% to not greater than 75% of the total axial length of the seal stack assembly 101.

At least one seal of the plurality of third annular seals 140 is configured to contact and provide an annular seal between a portion of the housing 102 and a portion of the shaft 104 of the assembly 100. At least one seal of the plurality of third annular seals 140 may be different from the first annular seal 110. At least one seal of the plurality of third annular seals 140 may be different from the second annular seal 120. At least one seal of the plurality of third annular seals 140 generally comprises a jacket 141 comprising a base 142, an inner sealing leg 144 extending from the base 142, an outer sealing leg 146 extending from the base 142, and a metal support ring 148 disposed within the jacket 141. In some embodiments, the support ring 148 may comprise a substantially L-shaped component, a substantially U-shaped component, a substantially rectangular component, or any other suitable shape. In some embodiments, the support ring 148 may be disposed in the jacket 141 such that the support ring 148 is in contact with the outer sealing leg 146 of the jacket 141. In some embodiments, the support ring 148 may be disposed in the jacket 141 such that the support ring 148 is in contact with the base 142 and the outer sealing leg 146 of the jacket 141. In other embodiments, the support ring 148 may be disposed in the jacket 141 such that the support ring 148 is in contact with the base 142, the inner sealing leg 144 of the jacket 141, and the outer sealing leg 146 of the jacket 141.

In some embodiments, the support ring 148 may provide additional support to the at least one seal of the plurality of third annular seals 140 as compared to the first annular seal 110 and the second annular seal 120. In some embodiments, the support ring 148 may enable the at least one seal of the plurality of third annular seals 140 to withstand more extreme temperatures and/or pressures as compared to the first annular seal 110 and the second annular seal 120. At least one seal of the plurality of third annular seals 140 may also comprise an energizing spring 150. The energizing spring 150 may be disposed within the jacket 141 between and in contact with the inner sealing leg 144 of the jacket 141 and the support ring 148. In some embodiments, the energizing spring 150 may be elliptical or oval. However, in other embodiments, the energizing spring 150 may be round, U-shaped, or any other shape. The energizing spring 150 may be configured to bias the inner sealing leg 144 and the outer sealing leg 146 away from each other to maintain contact between the sealing legs 144, 146 of a third annular seal 140 and each of the housing 102 and the shaft 104 of the assembly 100.

At least one seal of the plurality of third annular seals 140 may be disposed in the second portion 109 of the cavity 108 of the assembly 100. At least one seal of the plurality of third annular seals (140) is disposed axially adjacent to the spacer (130). In some embodiments, at least one seal of the plurality of the third annular seals 140 may comprise a smaller outer diameter than an outer diameter of the first annular seal 110, the second annular seal 120, and/or the spacer 130. In some embodiments, at least one seal of the plurality of the third annular seals 140 may comprise a larger outer diameter than the outer diameter of the first annular seal 110, the second annular seal 120, and/or the spacer 130. In some embodiments, at least one seal of the plurality of the third annular seals 140 may comprise a substantially similar or the same outer diameter as the outer diameter of the first annular seal 110, the second annular seal 120, and/or the spacer 130. It will be appreciated that the outer diameter of at least one seal of the plurality of third annular seals 140 may be based on the outer diameter of the second portion 109 of the cavity 108.

In some embodiments, the outer diameter of at least one seal of the plurality of third annular seals 140 may be at least 1%, at least 2%, at least 3%, at least 4%, at least 5%, at least 10%, at least 15%, at least 20%, or at least 25% smaller or larger than the outer diameter of the first annular seal 110, the second annular seal 120, and/or the spacer 130. In some embodiments, the outer diameter of at least one seal of the plurality of third annular seals 140 may be not greater than 50%, not greater than 45%, not greater than 40%, not greater than 35%, not greater than 30%, or not greater than 25% smaller or larger than the outer diameter of the first annular seal 110, the second annular seal 120, and/or the spacer 130. Further, the outer diameter of at least one seal of the plurality of third annular seals 140 may be between any of these minimum and maximum values, such as at least 1% to not greater than 50%, or even at least 10% to not greater than 25% smaller or larger than the outer diameter of the first annular seal 110, the second annular seal 120, and/or the spacer 130.

At least one seal of the plurality of third annular seals 140 may be disposed adjacent to the spacer 130 at the lower end of the seal stack assembly 101. At least one seal of the plurality of third annular seals 140 may generally be oriented in the cavity 108 such that the jacket 141 is open outward towards the lower end of the seal stack assembly 101 and the base 142 of the jacket 141 is oriented adjacent to the spacer 130 and/or inward towards the upper end of the seal stack assembly 101. Additionally, at least one seal of the plurality of third annular seals 140 may generally be oriented in the cavity 108 such that the inner sealing leg 144 of the jacket 141 extends along and in contact with the shaft 104 and the outer sealing leg 116 of the jacket 141 extends along and in contact with the housing 102. According to the present invention, the seal stack assembly 101 comprises a plurality of third seals 140. Each of the plurality of third annular seals 140 may be oriented in the same direction as disclosed herein.

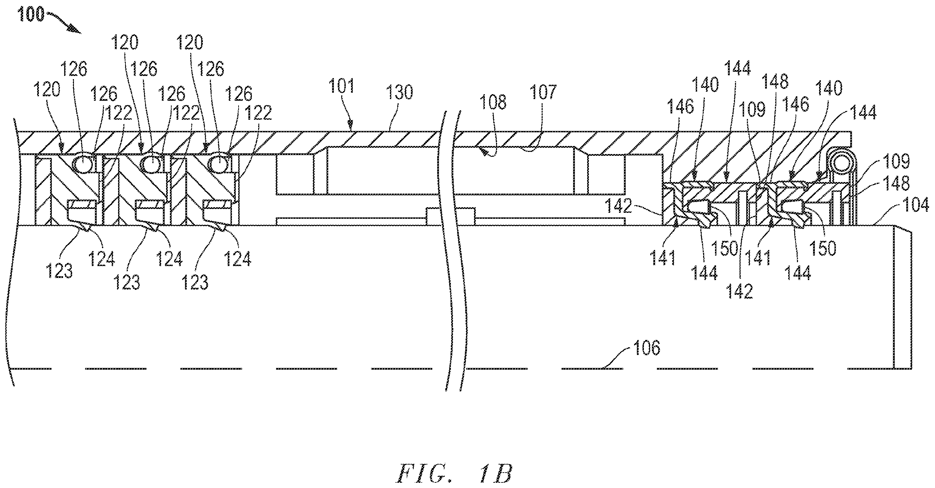

FIG. 1B shows a partial cross-sectional view of an assembly 100 having an annular seal stack assembly 101 according to an embodiment of the disclosure. The components of the assembly 100 may have features of the components similarly referenced in FIG. 1A as described above. The annular seal stack assembly 101 comprises at least one second annular seal 120, a spacer 130 disposed axially adjacent to the at least one second annular seal 120, and a plurality of third seals 140 axially abutting each other. As shown in FIG. 1B, the second seal 120 includes a body 122, an inner sealing leg 123, and a sealing flange 124 extending at an angle from an end of the sealing leg 123. Further, the second seal 120 may include a sealing ring 126 disposed within a cavity 127 of the body 122 of the second seal 120. Further, the sealing ring 126 may comprise an energizing spring. In this embodiment, the second seal 120 forms an outer sealing leg on the outer diameter of the second annular seal 120, which partially forms the cavity 127.

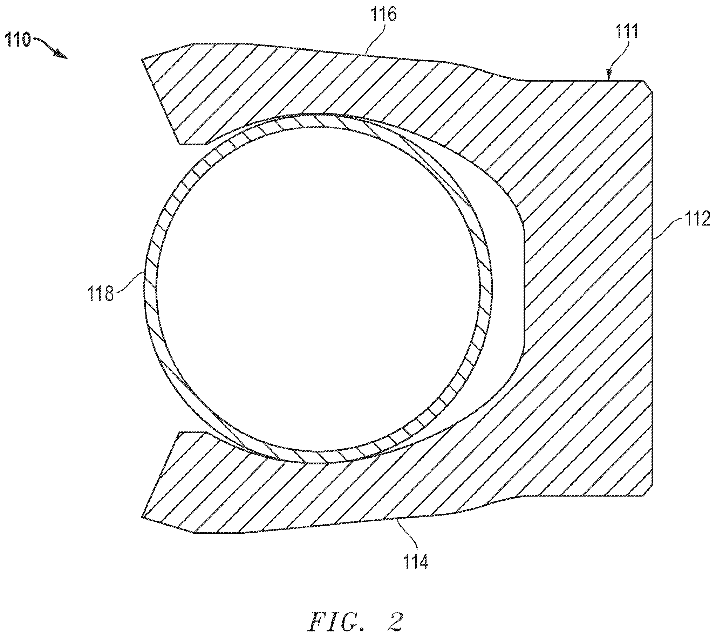

Further as shown in FIG. 1B, the seal stack assembly 101 includes a plurality of third seals 140 axially abutting each other. At least one seal of the plurality of third annular seals (140) is disposed axially adjacent to the spacer (130). At least one seal of the plurality of third annular seals 140 may be disposed in the second portion 109 of the cavity 108 of the assembly 100. At least one seal of the plurality of third annular seals 140 comprises a jacket 141 comprising a base 142, an inner sealing leg 144 extending from the base 142, an outer sealing leg 146 extending from the base 142, and a metal support ring 148 disposed within the jacket 141. At least one seal of the plurality of third annular seals 140 may also comprise an energizing spring 150. The energizing spring 150 may be disposed within the jacket 141 between and in contact with the inner sealing leg 144 of the jacket 141 and the support ring 148. In some embodiments, the energizing spring 150 may be elliptical or oval. However, in other embodiments, the energizing spring 150 may be round, U-shaped, or any other shape. The energizing spring 150 may be configured to bias the inner sealing leg 144 and the outer sealing leg 146 away from each other to maintain contact between the sealing legs 144, 146 of a third annular seal 140 and each of the housing 102 and the shaft 104 of the assembly 100. Further, the at least one seal of the plurality of third annular seals 140 also comprises a metal support ring 148 disposed within the jacket 141. The metal support ring 148 is in direct contact with a neighboring third annular seal of the plurality of third annular seals 140. In some embodiments, the support ring 148 may comprise a substantially L-shaped component, a substantially U-shaped component, a substantially rectangular component, or any other suitable shape. In some embodiments, the support ring 148 may be disposed in the jacket 141 such that the support ring 148 is in contact with the outer sealing leg 146 of the jacket 141. In some embodiments, the support ring 148 may be disposed in the jacket 141 such that the support ring 148 is in contact with the base 142 and the outer sealing leg 146 of the jacket 141. In other embodiments, the support ring 148 may be disposed in the jacket 141 such that the support ring 148 is in contact with the base 142, the inner sealing leg 144 of the jacket 141, and the outer sealing leg 146 of the jacket 141. In some embodiments, the outer sealing leg 146 may at least partially overlap the support ring 148 to retain the support ring 148 within the jacket 141. The inner sealing leg (123) of the second annular seal (120) and the inner sealing leg (144) of at least one seal of the plurality of third annular seals (140) both protrude in a first axial direction. FIG. 2 shows a cross-sectional view of the first annular seal 110 according to an embodiment of the disclosure. The first annular seal 110 may generally comprise a jacket 111 comprising a base 112, an inner sealing leg 114 extending from the base 112, and an outer sealing leg 116 extending from the base 112. The first annular seal 110 may also comprise an energizing spring 118 disposed within the jacket 111 between and in contact with the inner sealing leg 114 and the outer sealing leg 116 of the jacket 111. In some embodiments, the inner sealing leg 114 and the outer sealing leg 116 may be substantially similar and/or symmetrical about a centerline of the base 112. Additionally, while not shown, the first annular seal 110 may also comprise a scraper 119.

In some embodiments, the jacket 111 may be formed from a thermoset, thermoplastic, or a combination thereof. More specifically, the jacket 111 may be formed from PTFE, a fluoropolymer, a perfluoropolymer, PTFE, TFM, PVF, PVDF, PCTFE, PFA, FEP, ETFE, ECTFE, PCTFE, a polyarylketone such as PEEK, PEK, or PEKK, a polysulfone such as PPS, PPSU, PSU, PPE, or PPO, aromatic polyamides such as PPA, thermoplastic polyimides such as PEI or TPI, or any combination thereof, either with or without reinforcing fillers.

In some embodiments, the energizing spring 118 may be formed from a resilient metallic material. More specifically, the energizing spring 118 may be formed from a nickel-chromium based alloy such as Inconel^{®}, a nickel-based alloy, a cobalt-chromium-nickel-molybdenum alloy, a cobalt-chromium-nickel alloy such as Elgiloy^{®}, nickel, titanium, tungsten, stainless steel, spring steel, steel, aluminum, zinc, copper, magnesium, tin, platinum, lead, iron, or bronze. In some embodiments, the energizing spring 118 may comprise a coating or plating, such as a gold plating, a silver plating, a nickel plating, an aluminum chromium nitride (AlCrN) plating, a titanium aluminum nitride (TiAlN) plating, any other wear resistant metallic plating, or any combination thereof.

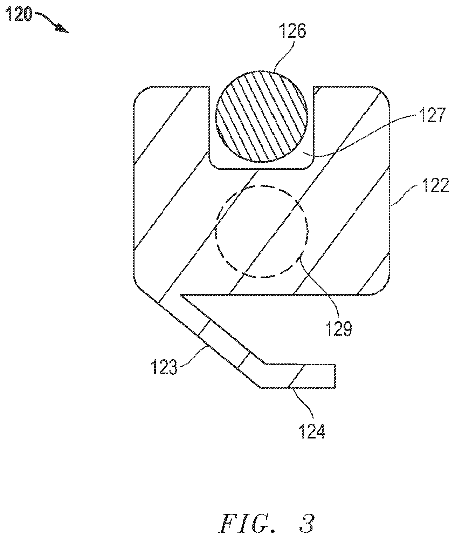

FIG. 3 shows a cross-sectional view of the second annular seal 120 according to an embodiment of the disclosure. The second annular seal 120 generally comprises a body 122, an inner sealing leg 123 extending at an angle from the body 122, and a sealing flange 124 extending at an angle from an end of the inner sealing leg 123. The second annular seal 120 may also comprise and a sealing ring 126 disposed in a cavity 127 formed in the body 122 and on an opposing side of the body 122 from the sealing leg 123 and the sealing flange 124. In some embodiments, the sealing ring 126 may comprise an O-ring. However, in some embodiments, the sealing ring 126 may comprise an energizing spring. In some embodiments, the body 122 may comprise a substantially rectangular or square profile. Further, in some embodiments, the body 122 may comprise rounded or chamfered corners. In some embodiments, the second annular spring 120 may comprise an energizing spring disposed between the body 122 and the sealing leg 123 and/or the sealing flange 124. In some embodiments, the second annular seal 120 may comprise a metal band 129 disposed throughout the body 122. The metal band 129 may reduce the sensitivity of the second annular seal 120 to thermal contraction.

As stated, the inner sealing leg 123 extends from the body 122 at an angle. In some embodiments, the inner sealing leg 123 may extend from the body 122 at an angle of at least 15 degrees, at least 30 degrees, at least 35 degrees, at least 40 degrees, at least 45 degrees, at least 50 degrees, at least 55 degrees, at least 60 degrees, at least 65 degrees, or at least 70 degrees. In some embodiments, the inner sealing leg 123 may extend from the body 122 at an angle of not greater than 90 degrees, not greater than 85 degrees, not greater than 80 degrees, not greater than 75 degrees, or not greater than 70 degrees. Further, it will be appreciated that the inner sealing leg 123 may extend from the body 122 at an angle of between any of these minimum and maximum values, such as at least 15 degrees to not greater than 90 degrees, or even at least 30 degrees to not greater than 60 degrees.

In some embodiments, the body 122, the inner sealing leg 123, and the sealing flange 124 (collectively main body portion) may generally be formed from a thermoset, thermoplastic, or a combination thereof. More specifically, the body 122, the inner sealing leg 123, and the sealing flange 124 (collectively main body portion) may be formed from PTFE, a fluoropolymer, a perfluoropolymer, PTFE, TFM, PVF, PVDF, PCTFE, PFA, FEP, ETFE, ECTFE, PCTFE, a polyarylketone such as PEEK, PEK, or PEKK, a polysulfone such as PPS, PPSU, PSU, PPE, or PPO, aromatic polyamides such as PPA, thermoplastic polyimides such as PEI or TPI, or any combination thereof, either with or without reinforcing fillers.

In some embodiments, the sealing ring 126 may be formed from an elastomeric material. In some embodiments, the sealing ring 126 may be formed from a resilient metallic material. More specifically, the sealing ring 126 may be formed from a nickel-chromium based alloy such as Inconel^{®}, a nickel-based alloy, a cobalt-chromium-nickel-molybdenum alloy, a cobalt-chromium-nickel alloy such as Elgiloy^{®}, nickel, titanium, tungsten, stainless steel, spring steel, steel, aluminum, zinc, copper, magnesium, tin, platinum, lead, iron, or bronze. In some embodiments, the sealing ring 126 may comprise a coating or plating, such as a gold plating, a silver plating, a nickel plating, an aluminum chromium nitride (AlCrN) plating, a titanium aluminum nitride (TiAlN) plating, any other wear resistant metallic plating, or any combination thereof.

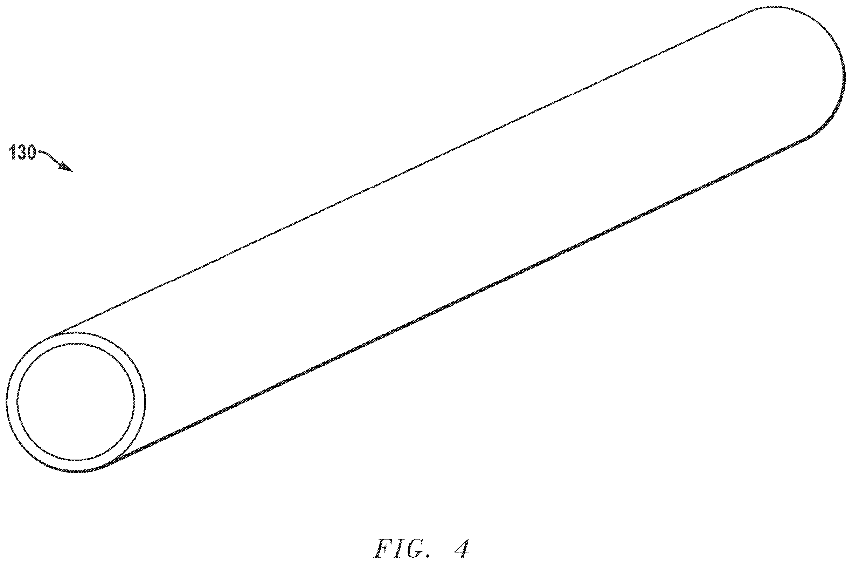

FIG. 4 shows an oblique view of the spacer 130 according to an embodiment of the disclosure. The spacer 130 may generally comprise a rigid hollow component having a substantially uniform inner diameter and a substantially uniform outer diameter. In some embodiments, the spacer 130 may be configured to cooperate with and/or support the first annular seal 110, the at least one second annular seal 120, and at least one seal of the plurality of the third annular seals 140 to maintain an annular seal between the housing 102 and the shaft 104 of the assembly 100. In some embodiments, the spacer 130 may also distribute forces acting on one or more of the annular seals 110, 120, 140 to other annular seals 110, 120, 140 in the seal stack assembly 101 to maintain a pressure distribution across the seal stack assembly 101.

In some embodiments, the spacer 130 may be formed from a metallic material. More specifically, the spacer 130 may be formed from a nickel-chromium based alloy such as Inconel^{®}, a nickel-based alloy, a cobalt-chromium-nickel-molybdenum alloy, a cobalt-chromium-nickel alloy such as Elgiloy^{®}, nickel, titanium, tungsten, stainless steel, spring steel, steel, aluminum, zinc, copper, magnesium, tin, platinum, lead, iron, or bronze. In some embodiments, the spacer 130 may comprise a coating or plating. In some embodiments, the coating may be formed from PTFE, gold, silver, nickel, aluminum chromium nitride (AlCrN), titanium aluminum nitride (TiAlN), bronze, any other wear resistant metallic plating, any other soft metallic plating, or any combination thereof. The coating or plating may be configured to protect the spacer 130 from wear cause by relative movement of the shaft 104 with respect to the spacer 130.

In other embodiments, the spacer 130 may be formed from a thermoset, thermoplastic, or a combination thereof. More specifically, the spacer 130 may be formed from PTFE, a fluoropolymer, a perfluoropolymer, PTFE, TFM, PVF, PVDF, PCTFE, PFA, FEP, ETFE, ECTFE, PCTFE, a polyarylketone such as PEEK, PEK, or PEKK, a polysulfone such as PPS, PPSU, PSU, PPE, or PPO, aromatic polyamides such as PPA, thermoplastic polyimides such as PEI or TPI, or any combination thereof, either with or without reinforcing fillers.

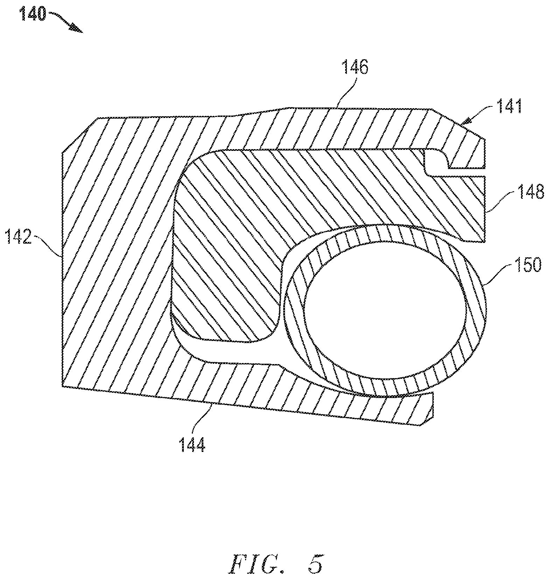

FIG. 5 shows a cross-sectional view of a third annular seal 140 according to an embodiment of the disclosure. At least one seal of the plurality of third annular seals 140 generally comprises a jacket 141 comprising a base 142, an inner sealing leg 144 extending from the base 142, and an outer sealing leg 146 extending from the base 142. The third annular seal 140 may also comprise a support ring 148 disposed within the jacket 141. In some embodiments, the support ring 148 may comprise a substantially L-shaped component, a substantially U-shaped component, or any other suitable shape. In some embodiments, the support ring 148 may be disposed in the jacket 141 such that the support ring 148 is in contact with the outer sealing leg 146 of the jacket 141. In some embodiments, the support ring 148 may be disposed in the jacket 141 such that the support ring 148 is in contact with the base 142 and the outer sealing leg 146 of the jacket 141. In other embodiments, the support ring 148 may be disposed in the jacket 141 such that the support ring 148 is in contact with the base 142, the inner sealing leg 144 of the jacket 141, and the outer sealing leg 146 of the jacket 141. In some embodiments, the outer sealing leg 146 may at least partially overlap the support ring 148 to retain the support ring 148 within the jacket 141.

In some embodiments, the support ring 148 may provide additional support to the third annular seal 140 as compared to the first annular seal 110 and the second annular seal 120. In some embodiments, the support ring 148 may enable the third annular seal 140 to withstand more extreme temperatures and/or pressures as compared to the first annular seal 110 and the second annular seal 120. The third annular seal 140 may also comprise an energizing spring 150. The energizing spring 150 may be disposed within the jacket 141 between and in contact with the inner sealing leg 144 of the jacket 141 and the support ring 148. In some embodiments, the energizing spring 150 may be elliptical or oval. However, in other embodiments, the energizing spring 150 may be round, U-shaped, or any other shape. The energizing spring 150 may be configured to bias the inner sealing leg 144 and the outer sealing leg 146 away from each other to maintain contact between the sealing legs 144, 146 of the third annular seal 140 and each of the housing 102 and the shaft 104 of the assembly 100.

In some embodiments, the jacket 141 may generally be formed from a thermoset, thermoplastic, or a combination thereof. More specifically, the jacket 141 may be formed from PTFE, a fluoropolymer, a perfluoropolymer, PTFE, TFM, PVF, PVDF, PCTFE, PFA, FEP, ETFE, ECTFE, PCTFE, a polyarylketone such as PEEK, PEK, or PEKK, a polysulfone such as PPS, PPSU, PSU, PPE, or PPO, aromatic polyamides such as PPA, thermoplastic polyimides such as PEI or TPI, or any combination thereof, either with or without reinforcing fillers.

In some embodiments, the support ring 148 may generally be formed from a resilient metallic material. More specifically, the support ring 148 may be formed from a nickel-chromium based alloy such as Inconel^{®}, a nickel-based alloy, a cobalt-chromium-nickel-molybdenum alloy, a cobalt-chromium-nickel alloy such as Elgiloy^{®}, nickel, titanium, tungsten, stainless steel, spring steel, steel, aluminum, zinc, copper, magnesium, tin, platinum, lead, iron, or bronze. In some embodiments, the metallic support ring 148 may comprise a coating or plating, such as a gold plating, a silver plating, a nickel plating, an aluminum chromium nitride (AlCrN) plating, a titanium aluminum nitride (TiAlN) plating, any other wear resistant metallic plating, or any combination thereof.

In some embodiments, the energizing spring 150 may generally be formed from a resilient metallic material. More specifically, the energizing spring 150 may be formed from a nickel-chromium based alloy such as Inconel^{®}, a nickel-based alloy, a cobalt-chromium-nickel-molybdenum alloy, a cobalt-chromium-nickel alloy such as Elgiloy^{®}, nickel, titanium, tungsten, stainless steel, spring steel, steel, aluminum, zinc, copper, magnesium, tin, platinum, lead, iron, or bronze. In some embodiments, the energizing spring 150 may comprise a coating or plating, such as a gold plating, a silver plating, a nickel plating, an aluminum chromium nitride (AlCrN) plating, a titanium aluminum nitride (TiAlN) plating, any other wear resistant metallic plating, or any combination thereof.

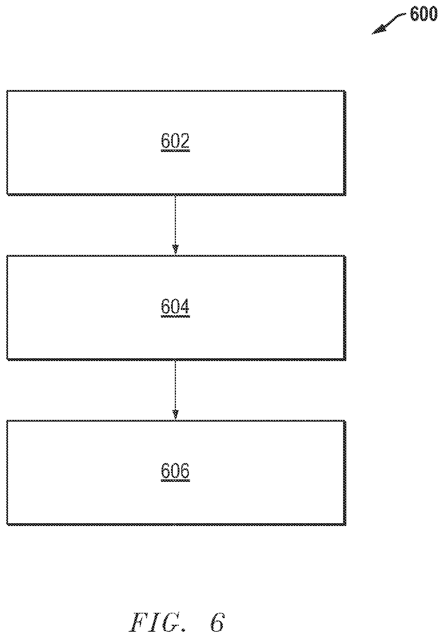

FIG. 6 shows a flowchart of a method 500 of forming an annular seal in an assembly 100 according to an example of the disclosure. The method 500 may begin at block 502 by providing an assembly 100 comprising a seal stack assembly 101 having a first annular seal 110, at least one second annular seal 120 disposed axially adjacent to the first annular seal 110, a spacer 130 disposed axially adjacent to the at least one second annular seal 120, and a plurality of third annular seals 140 disposed axially adjacent to the spacer 130. The method 500 may continue at block 504 by operating the assembly 100 at cryogenic temperatures, exposing at least a portion of the seal stack assembly 101 to cryogenic temperatures, or a combination thereof. The method 500 may continue at block 506 by continually providing an annular seal between a housing 102 and a shaft 104 of the assembly 100. In some examples, continually providing an annular seal between a housing 102 and a shaft 104 of the assembly 100 may occur simultaneously with operating the assembly 100 at cryogenic temperatures, exposing at least a portion of the seal stack assembly 101 to cryogenic temperatures, or a combination thereof. In some examples, continually providing an annular seal between a housing 102 and a shaft 104 of the assembly 100 may occur during relative motion between the shaft 104 and the seal stack assembly 101. In some examples, continually providing an annular seal between a housing 102 and a shaft 104 of the assembly 100 may occur during a change in pressure, a change in temperature, or a combination thereof. In some examples, the seal stack assembly 101 may be oriented in the assembly 100, such that at least one seal of the plurality of third annular seals 140 is subjected to the cryogenic temperatures.

Embodiments of the seal stack assembly 101 may comprise a total axial length suitable for a particular application. In some embodiments, the total axial length of the seal stack assembly 101 may be at least 25 mm, at least 50 mm, at least 75 mm, at least 100 mm, at least 125 mm, at least 150 mm, at least 175 mm, at least 200 mm, at least 225 mm, at least 250 mm, at least 275 mm, at least 300 mm, at least 325 mm, at least 350 mm, at least 375 mm, at least 400 mm, at least 425 mm, at least 450 mm, at least 475 mm, at least 500 mm, or at least 1000 mm.

Embodiments of the seal stack assembly 101 may comprise inner and outer diameters suitable for a particular application. In some embodiments, an inner diameter of the seal stack assembly 101 may be at least 1 mm, at least 2 mm, at least 3 mm, at least 4 mm, at least 5 mm, at least 6 mm, at least 7 mm, at least 8 mm, at least 9 mm, at least 10 mm, at least 25 mm, at least 50 mm, at least 75 mm, at least 100 mm, at least 150 mm, at least 200 mm, at least 250 mm, at least 300 mm, at least 500 mm, or even greater. In some embodiments, an outer diameter of the seal stack assembly 101 may be at least 1 mm, at least 2 mm, at least 3 mm, at least 4 mm, at least 5 mm, at least 6 mm, at least 7 mm, at least 8 mm, at least 9 mm, at least 10 mm, at least 11 mm, at least 12 mm, at least 13 mm, at least 14 mm, at least 15 mm, at least 25 mm, at least 50 mm, at least 75 mm, at least 100 mm, at least 150 mm, at least 200 mm, at least 250 mm, at least 300 mm, at least 500 mm, at least 1000 mm, or even greater.

Furthermore, it will be appreciated that the seal stack assembly 101 may not comprise a first annular seal 110 but may include a scraper 119. In some embodiments, the first annular seal 110 may be substantially similar, or even identical to the third annular seal 140. Accordingly, in some embodiments, the first annular seal 110 may be identical to the third annular seal 140 and may comprise a scraper 119 as disclosed herein. Furthermore, in some embodiments, the assembly 100 and/or the seal stack assembly 101 may comprise additional intervening annular seals between any of the first annular seal 110, the second annular seal 120 or plurality of second annular seals 120, the spacer 130, and/or plurality of third annular seals 140.

This written description uses examples to disclose the embodiments, including the best mode, and also to enable those of ordinary skill in the art to make and use the invention. The patentable scope is defined by the claims.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below..

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

After reading the specification, skilled artisans will appreciate that certain features are, for clarity, described herein in the context of separate embodiments, may also be provided in combination in a single embodiment. Conversely, various features that are, for brevity, described in the context of a single embodiment, may also be provided separately or in any subcombination. Further, references to values stated in ranges include each and every value within that range.

## Claims

1. An annular seal stack assembly (101), comprising:
at least one second annular seal (120),
a spacer (130) disposed axially adjacent to the at least one second annular seal (120), and
a plurality of third annular seals (140),
**characterized in that**:
the second annular seal (120) comprises a body (122), an inner sealing leg (123) extending at an angle from the body (122),
the plurality of third annular seals (140) axially abut one another,
at least one seal of the plurality of third annular seals (140) is disposed axially adjacent to the spacer (130),
at least one seal of the plurality of third annular seals (140) comprises a jacket (141) comprising a base (142), an inner sealing leg (144) extending from the base (142), and an outer sealing leg (146) extending from the base (142), and a metal support ring (148) disposed within the jacket (141),
the inner sealing leg (123) of the second annular seal (120) and the inner sealing leg (144) of at least one seal of the plurality of third annular seals (140) both protrude in a first axial direction,
the metal support ring (148) is in direct contact with a neighboring third annular seal of the plurality of third annular seals (140).

2. The annular seal stack assembly (101) of claim 1, wherein:
the at least one second annular seal (120) is disposed towards a lower end of the seal stack;
the spacer (130) is disposed towards a lower end of the seal stack with respect to the at least one second annular seal (120); and
the plurality of third annular seals (140) are disposed at the lower end of the seal stack assembly (101).

3. The seal stack assembly (101) of any of claims 1-2, wherein the second annular seal (120) comprises a sealing flange (124) extending at an angle from an end of the inner sealing leg (123), and a sealing ring (126) disposed in a cavity (127) formed in the body (122) and on an opposing side of the body (122) from the sealing leg (123) and the sealing flange (124).

4. The seal stack assembly (101) of any of claims 1-2, further comprising: an energizing spring disposed between the body (122) and the sealing leg (123) or the sealing flange (124).

5. The seal stack assembly (101) of any of claims 1-2, wherein the second annular seal (120) is disposed in the first portion (107) of a cavity (108) of the assembly.

6. The seal stack assembly (101) of claim 5, wherein the second annular seal (120) is oriented in the cavity (108) such that the inner sealing leg (123) extends from the body (122) inwardly at an angle towards the shaft (104) and in the direction of the spacer (130).

7. The seal stack assembly (101) of claim 6, wherein the second annular seal (120) is oriented such that the sealing flange (124) is in contact with the shaft (104).

8. The seal stack assembly (101) of claim 7, wherein the sealing flange (124) is substantially flat about a circumference or an outer diameter of the shaft (104).

9. The seal stack assembly (101) of claim 8, wherein the second annular seal (120) is oriented such that the sealing ring (126) is in contact with and forms an annular seal with the housing (102) of the assembly (100).

10. The seal stack assembly (101) of claim 9, wherein the sealing ring (126) comprises an O-ring, an energizing spring, or a spring energized seal.

11. The seal stack assembly (101) of any of claims 1-2, wherein the second annular seal (120) comprises a main body portion comprising the body (122), the inner sealing leg (123), and the sealing flange (124), wherein the main body portion of the second annular seal is formed from a thermoset, thermoplastic, or a combination thereof.

12. The seal stack assembly (101) of any of claims 1-2, wherein the third annular seal (140) further comprises an energizing spring (150) disposed between and in contact with the inner sealing leg (144) of the jacket (141) and the support ring (148).

13. The seal stack assembly (101) of claim 12, wherein the support ring (148) comprises a substantially L-shaped, a substantially U-shaped, or a substantially rectangular component, wherein the support ring (148) is in contact with at least one of the base (142), inner sealing leg (144), and an outer sealing leg (146).

14. An assembly (100), comprising:
a housing (102);
a shaft (104) disposed within the housing (102);
a cavity (108) formed between the housing (102) and the shaft (104); and
the annular seal stack assembly (101) of any of the preceding claims disposed in the cavity (108) and annularly about the shaft (104), wherein the annular seal stack is configured to provide a seal between the housing (102) and the shaft (104).

15. The assembly (100) of claim 14, wherein the cavity (108) comprises a first portion (107) and a second portion (109).

## Patentansprüche

1. Ringförmige Dichtungsstapelbaugruppe (101), umfassend:
mindestens eine zweite ringförmige Dichtung (120),
einen Abstandshalter (130), der axial benachbart zu der mindestens einen zweiten ringförmigen Dichtung (120) angeordnet ist, und
eine Vielzahl von dritten ringförmigen Dichtungen (140),
**dadurch gekennzeichnet, dass:**
die zweite ringförmige Dichtung (120) einen Körper (122) und einen inneren Dichtungsschenkel (123) umfasst, der sich in einem Winkel von dem Körper (122) erstreckt,
die Vielzahl der dritten ringförmigen Dichtungen (140) axial aneinander stoßen,
mindestens eine Dichtung der Vielzahl von dritten ringförmigen Dichtungen (140) axial neben dem Abstandshalter (130) angeordnet ist,
mindestens eine Dichtung der Vielzahl dritter ringförmiger Dichtungen (140) einen Mantel (141) umfasst, der eine Basis (142), einen inneren Dichtungsschenkel (144), der sich von der Basis (142) aus erstreckt, und einen äußeren Dichtungsschenkel (146), der sich von der Basis (142) aus erstreckt, und einen Metallstützring (148) umfasst, der innerhalb des Mantels (141) angeordnet ist,
der innere Dichtungsschenkel (123) der zweiten ringförmigen Dichtung (120) und der innere Dichtungsschenkel (144) mindestens einer Dichtung der Vielzahl dritter ringförmiger Dichtungen (140) beide in eine erste axiale Richtung ragen,
der Metallstützring (148) in direktem Kontakt mit einer benachbarten dritten ringförmigen Dichtung der Vielzahl von dritten ringförmigen Dichtungen (140) steht.

2. Ringförmige Dichtungsstapelbaugruppe (101) nach Anspruch 1, wobei:
die mindestens eine zweite ringförmige Dichtung (120) in Richtung eines unteren Endes des Dichtungsstapels angeordnet ist;
der Abstandshalter (130) in Richtung eines unteren Endes des Dichtungsstapels in Bezug auf die mindestens eine zweite ringförmige Dichtung (120) angeordnet ist; und
die Vielzahl von dritten ringförmigen Dichtungen (140) am unteren Ende der Dichtungsstapelbaugruppe (101) angeordnet sind.

3. Dichtungsstapelbaugruppe (101) nach einem der Ansprüche 1 bis 2, wobei die zweite ringförmige Dichtung (120) einen Dichtungsflansch (124) umfasst, der sich in einem Winkel von einem Ende des inneren Dichtungsschenkels (123) aus erstreckt, und einen Dichtungsring (126), der in einem im Körper (122) gebildeten Hohlraum (127) und auf einer dem Dichtungsschenkel (123) und dem Dichtungsflansch (124) gegenüberliegenden Seite des Körpers (122) angeordnet ist.

4. Dichtungsstapelbaugruppe (101) nach einem der Ansprüche 1 bis 2, ferner umfassend: eine zwischen dem Körper (122) und dem Dichtungsschenkel (123) oder dem Dichtungsflansch (124) angeordnete Spannfeder.

5. Dichtungsstapelbaugruppe (101) nach einem der Ansprüche 1 bis 2, wobei die zweite ringförmige Dichtung (120) im ersten Abschnitt (107) eines Hohlraums (108) der Baugruppe angeordnet ist.

6. Dichtungsstapelbaugruppe (101) nach Anspruch 5, wobei die zweite ringförmige Dichtung (120) in dem Hohlraum (108) so ausgerichtet ist, dass sich der innere Dichtungsschenkel (123) vom Körper (122) nach innen in einem Winkel zur Welle (104) und in Richtung des Abstandshalters (130) erstreckt.

7. Dichtungsstapelbaugruppe (101) nach Anspruch 6, wobei die zweite ringförmige Dichtung (120) so ausgerichtet ist, dass der Dichtungsflansch (124) in Kontakt mit der Welle (104) steht.

8. Dichtungsstapelbaugruppe (101) nach Anspruch 7, wobei der Dichtungsflansch (124) um einen Umfang oder einen Außendurchmesser der Welle (104) im Wesentlichen flach ist.

9. Dichtungsstapelbaugruppe (101) nach Anspruch 8, wobei die zweite ringförmige Dichtung (120) so ausgerichtet ist, dass der Dichtungsring (126) mit dem Gehäuse (102) der Baugruppe (100) in Kontakt ist und eine ringförmige Dichtung bildet.

10. Dichtungsstapelbaugruppe (101) nach Anspruch 9, wobei der Dichtungsring (126) einen O-Ring, eine erregende Feder oder eine federunterstützte Dichtung umfasst.

11. Dichtungsstapelbaugruppe (101) nach einem der Ansprüche 1 bis 2, wobei die zweite ringförmige Dichtung (120) einen Hauptkörperabschnitt umfasst, der den Körper (122), den inneren Dichtungsschenkel (123) und den Dichtungsflansch (124) umfasst, wobei der Hauptkörperabschnitt der zweiten ringförmigen Dichtung aus einem wärmehärtbaren Kunststoff, einem Thermoplast oder einer Kombination davon gebildet ist.

12. Dichtungsstapelbaugruppe (101) nach einem der Ansprüche 1 bis 2, wobei die dritte ringförmige Dichtung (140) ferner eine erregende Feder (150) umfasst, die zwischen dem inneren Dichtungsschenkel (144) des Mantels (141) und dem Stützring (148) angeordnet ist und mit diesen in Kontakt steht.

13. Dichtungsstapelbaugruppe (101) nach Anspruch 12, wobei der Stützring (148) eine im Wesentlichen L-förmige, eine im Wesentlichen U-förmige oder eine im Wesentlichen rechteckige Komponente umfasst, wobei der Stützring (148) mit mindestens einer der Basis (142), dem inneren Dichtungsschenkel (144) und einem äußeren Dichtungsschenkel (146) in Kontakt ist.

14. Baugruppe (100), umfassend:
ein Gehäuse (102);
eine Welle (104), die innerhalb des Gehäuses (102) angeordnet ist;
einen Hohlraum (108), der zwischen dem Gehäuse (102) und der Welle (104) ausgebildet ist; und
die ringförmige Dichtungsstapelbaugruppe (101) nach einem der vorstehenden Ansprüche, die in dem Hohlraum (108) und ringförmig um die Welle (104) angeordnet ist, wobei der ringförmige Dichtungsstapel konfiguriert ist, um eine Dichtung zwischen dem Gehäuse (102) und der Welle (104) bereitzustellen.

15. Baugruppe (100) nach Anspruch 14, wobei der Hohlraum (108) einen ersten Abschnitt (107) und einen zweiten Abschnitt (109) umfasst.

## Revendications

1. Ensemble empilement de joints annulaires (101), comprenant :
au moins un deuxième joint annulaire (120),
une entretoise (130) disposée axialement adjacente à l'au moins un deuxième joint annulaire (120), et
une pluralité de troisièmes joints annulaires (140),
**caractérisé en ce que :**
le deuxième joint annulaire (120) comprend un corps (122), une jambe d'étanchéité interne (123) s'étendant à un angle par rapport au corps (122),
la pluralité de troisièmes joints annulaires (140) sont en butée axialement les uns contre les autres,
au moins un joint de la pluralité de troisièmes joints annulaires (140) est disposé axialement adjacent à l'entretoise (130),
au moins un joint de la pluralité de troisièmes joints annulaires (140) comprend une chemise (141) comprenant une base (142), une jambe d'étanchéité interne (144) s'étendant à partir de la base (142), et une jambe d'étanchéité externe (146) s'étendant à partir de la base (142), et une bague de support métallique (148) disposée à l'intérieur de la chemise (141),
la jambe d'étanchéité interne (123) du deuxième joint annulaire (120) et la jambe d'étanchéité interne (144) d'au moins un joint de la pluralité de troisièmes joints annulaires (140) font toutes deux saillie dans une première direction axiale,
la bague de support métallique (148) est en contact direct avec un troisième joint annulaire voisin de la pluralité de troisièmes joints annulaires (140).

2. Ensemble empilement de joints annulaires (101) selon la revendication 1, dans lequel :
l'au moins un deuxième joint annulaire (120) est disposé vers une extrémité inférieure de l'empilement de joints ;
l'entretoise (130) est disposée vers une extrémité inférieure de l'empilement de joints par rapport à l'au moins un deuxième joint annulaire (120) ; et
la pluralité de troisièmes joints annulaires (140) est disposée au niveau de l'extrémité inférieure de l'ensemble empilement de joints (101).

3. Ensemble empilement de joints (101) selon l'une quelconque des revendications 1 à 2, dans lequel le deuxième joint annulaire (120) comprend une bride d'étanchéité (124) s'étendant à un angle à partir d'une extrémité de la jambe d'étanchéité interne (123), et une bague d'étanchéité (126) disposée dans une cavité (127) formée dans le corps (122) et sur un côté opposé du corps (122) de la jambe d'étanchéité (123) et de la bride d'étanchéité (124).

4. Ensemble empilement de joints (101) selon l'une quelconque des revendications 1 à 2, comprenant en outre : un ressort d'excitation disposé entre le corps (122) et la jambe d'étanchéité (123) ou la bride d'étanchéité (124).

5. Ensemble empilement de joints (101) selon l'une quelconque des revendications 1 à 2, dans lequel le deuxième joint annulaire (120) est disposé dans la première partie (107) d'une cavité (108) de l'ensemble.

6. Ensemble empilement de joints (101) selon la revendication 5, dans lequel le deuxième joint annulaire (120) est orienté dans la cavité (108) de telle sorte que la jambe d'étanchéité interne (123) s'étend à partir du corps (122) vers l'intérieur à un angle vers l'arbre (104) et dans la direction de l'entretoise (130).

7. Ensemble empilement de joints (101) selon la revendication 6, dans lequel le deuxième joint annulaire (120) est orienté de telle sorte que la bride d'étanchéité (124) est en contact avec l'arbre (104).

8. Ensemble empilement de joints (101) selon la revendication 7, dans lequel la bride d'étanchéité (124) est sensiblement plate autour d'une circonférence ou d'un diamètre externe de l'arbre (104).

9. Ensemble empilement de joints (101) selon la revendication 8, dans lequel le deuxième joint annulaire (120) est orienté de telle sorte que la bague d'étanchéité (126) est en contact avec le boîtier (102) de l'ensemble (100) et forme un joint annulaire avec celui-ci.

10. Ensemble empilement de joints (101) selon la revendication 9, dans lequel la bague d'étanchéité (126) comprend un joint torique, un ressort d'excitation, ou un joint activé par ressort.

11. Ensemble empilement de joints (101) selon l'une quelconque des revendications 1 à 2, dans lequel le deuxième joint annulaire (120) comprend une partie de corps principal comprenant le corps (122), la jambe d'étanchéité interne (123), et la bride d'étanchéité (124), dans lequel la partie de corps principal du deuxième joint annulaire est formée d'un thermodurcissable, d'un thermoplastique, ou d'une combinaison de ceux-ci.

12. Ensemble empilement de joints (101) selon l'une quelconque des revendications 1 à 2, dans lequel le troisième joint annulaire (140) comprend en outre un ressort d'excitation (150) disposé entre et en contact avec la jambe d'étanchéité interne (144) de la chemise (141) et la bague de support (148).

13. Ensemble empilement de joints (101) selon la revendication 12, dans lequel la bague de support (148) comprend un composant sensiblement en forme de L, sensiblement en forme de U, ou sensiblement rectangulaire, dans lequel la bague de support (148) est en contact avec au moins l'une parmi la base (142), la jambe d'étanchéité interne (144), et une jambe d'étanchéité externe (146).

14. Ensemble (100), comprenant :
un boîtier (102) ;
un arbre (104) disposé à l'intérieur du boîtier (102) ;
une cavité (108) formée entre le boîtier (102) et l'arbre (104) ; et
l'ensemble empilement de joints annulaires (101) selon l'une quelconque des revendications précédentes disposé dans la cavité (108) et annulairement autour de l'arbre (104), dans lequel l'empilement de joints annulaires est conçu pour fournir un joint entre le boîtier (102) et l'arbre (104).

15. Ensemble (100) selon la revendication 14, dans lequel la cavité (108) comprend une première partie (107) et une seconde partie (109).
